# EUROPÄISCHE PATENTANMELDUNG

(11) **EP 2 562 503 A2**
(43) Veröffentlichungstag der Anmeldung: **27.02.2013**
(21) Anmeldenummer: 12180422.3
(22) Anmeldetag: 14.08.2012
(51) Int. Cl.: F26B 25/00, B01D 53/18

(54) **Trocknungssystem und -verfahren zur Lacktrocknung**

(30) Priorität: 25.08.2011 DE 202011104983 U
(71) Anmelder: Crone Wärmetechnik GmbH, 26817 Rhauderfehn (DE)
(72) Erfinder: Crone,, Fokko, 26817 Rhauderfehn (DE)
(74) Vertreter: Glawe, Delfs, Moll

(57) **Zusammenfassung**

Zur Lacktrocknung sind ein System und ein Verfahren vorgesehen, bei denen Abgas aus der Trocknung von Lack, in dem flüchtige organische Substanzen enthalten sind, gereinigt wird, indem das Abgas mit einem Flüssigkeitsfilm eines Absorbens in Kontakt gebracht wird, das über eine Anzahl von Trägern fließt. Das beladene Absorbens kann ebenfalls als Flüssigkeitsfilm über eine Anzahl von Trägern geführt werden, so dass durch Worüberstreichen eines Gases die flüchtigen organischen Substanzen aus dem beladenen Absorbens entfernt werden können. Die flüchtigen organischen Substanzen können aus dem Gas, das aus der Regeneration stammt, durch Abkühlen und Kondensation entfernt werden.

## Beschreibung

Diese Erfindung betrifft ein System und Verfahren zur Lacktrocknung, insbesondere zur Trocknung lackierter Karosserien.

Systeme zur Lacktrocknung werden beispielsweise bei der Herstellung von Automobilen eingesetzt. Die Karosserien werden zunächst lackiert. Die lackierten Karosserien werden anschließend getrocknet.

Herkömmlicherweise geschieht dies in Lacktrocknern, die mindestens eine Aufheizzone zum Aufheizen auf eine vorgegebene Temperatur und teilweise eine Haltezone, in der die vorgegebene Temperatur zur weiteren Trocknung gehalten wird, aufweisen. Beim Trocknen verdampft das Lösemittel der Lacke. Das Lösemittel kann vollständig aus organischen Lösemitteln bestehen oder Wasser enthalten. Das Lösemittel enthält auch im Falle von wasserbasierten Lacken organische Lösemittel. Das Abgas (Abluft) aus dem Trockner enthält diese verdampften Lösemittel und kann deshalb weder ohne weiteres zurückgeführt werden, da eine Trocknung mit lösemittelgesättigter Luft nicht möglich ist, noch ohne weitere Behandlung in die Umwelt geleitet werden, da die Lösemittelkonzentration meist über den geltenden Grenzwerten liegt. Daher ist eine Abgasreinigung notwendig.

Diese Abgasreinigung erfolgt gegenwärtig meist mittels thermischer Nachverbrennung (TNV, RTO o. ä.), bei der das Abgas in einer Verbrennungskammer bei erhöhter Temperatur, etwa bei 750 °C, durch Verbrennung der organischen Lösemittel gereinigt wird. Dadurch wird gereinigtes Abgas erhalten, das in die Umwelt geleitet werden kann. Bei der Nachverbrennung werden jedoch durch die Verbrennung neue Verunreinigungen gebildet, so dass eine Rückführung der gereinigten Luft zur erneuten Trocknung, d. h. ein Umluftbetrieb, nicht möglich ist.

Ein weiterer Nachteil der Nachverbrennung besteht in dem großen Energiebedarf. Um die nötige Temperatur zur Verbrennung zu erreichen, muss das Abgas aus dem Trockner, das z. B. eine Temperatur von 140 °C aufweisen kann, etwa mittels eines Erdgas- / Erdölbrenners (fossile Brennstoffe) nachgeheizt werden. Wegen der typischerweise nötigen großen Luftströme für die Trocknung sind die benötigten Energiemengen sehr groß. Zur Verringerung dieses Nachteils kann eine teilweise Rückgewinnung der Wärmeenergie aus dem Abgas nach der Nachverbrennung erfolgen, um das Abgas vor der Nachverbrennung vorzuwärmen und/oder die Zuluft für den Trockner zu erwärmen. Der Energiebedarf für die Trocknung ist jedoch selbst bei derart optimierten Systemen mit TNV sehr hoch, so dass diese Systeme kostenintensiv und wenig nachhaltig sind. Alternative Verbrennungsanlagen wie RTO/RNV nutzen die Lösemittel der Abluft und kommen teilweise ohne Stützfeuerung aus (autotherme Verbrennung).

Alternative Ansätze zur Abgasreinigung, etwa die Sorption von Schadstoffen aus Abgasen durch feste Sorbentien, wie in DD 271 849 A5 beschrieben, die Absorption aus Abgas von Lackierereien mit hochsiedendem Öl in Kolonnen im Gegenstromverfahren, wie in DE 25 11 181 A1 beschrieben, oder die Reinigung von Abgas aus Spritzkabinen mittels Wasser in einer Wirbelschicht, wie in DE 42 12 711 A1 beschrieben, sind, soweit bekannt, nicht in Trocknungssystemen zur Lacktrocknung zur Anwendung gekommen. Bei den bekannten Verfahren zur Abgasreinigung mit flüssigen Medien ist es häufig nötig, zusätzlichen Aufwand zur Entfernung mitgerissener Flüssigkeitströpfchen der Reinigungsflüssigkeit zu betreiber.

Aufgabe dieser Erfindung ist daher die Bereitstellung eines verbesserten Trocknungssystems und -verfahrens. Diese Aufgabe wird gelöst durch ein Trocknungssystem gemäß Anspruch 1 und ein Trocknungsverfahren gemäß Anspruch 6. Die abhängigen Ansprüche betreffen bevorzugte Ausführungsformen der Erfindung.

Das erfindungsgemäße Trocknungssystem unterscheidet sich von der oben beschriebenen herkömmlichen Trocknungsanlage durch die Abgasreinigungsvorrichtung, welche das Abgas (die Abluft aus der Trocknung) statt durch Verbrennung durch Luftwäsche reinigt. Dabei erfolgt die Abgasreinigung durch Absorption der flüchtigen organischen Substanz(en), also des oder der organischen Lösemittel, aus dem Abgas durch ein Absorbens, das als Flüssigkeitsfilm an der erfindungsgemäßen Trägeranordnung herabfließt. Vorteilhafterweise fließt das Absorbens im Wesentlichen senkrecht nach unten (andere Fließrichtungen sind möglich), während das Abgas im Wesentlichen horizontal durch die Trägeranordnung strömt, so dass Absorbens und Abgas im Kreuzstrom geführt werden. Aufgrund der geschlossenen, im Wesentlichen ungestörten Flüssigkeitsoberfläche des Absorbens kann eine Erzeugung und Mitnahme von Flüssigkeitströpfchen vermieden werden, solange die Strömungsgeschwindigkeit des Abgasstroms nicht zu groß gewählt wird.

Auf diese Weise entfällt der große Energiebedarf fossiler Brennstoffe für die Verbrennungsanlage und zusätzlich wird das Abgas bei der Reinigung nicht mit neuen Verunreinigungen, wie im Zusammenhang mit der Nachverbrennung oben beschrieben, versetzt, so dass eine Rückführung des gereinigten Abgases, entweder teilweise oder im Wesentlichen im geschlossenen Zirkulationsbetrieb, möglich ist. Wärme wird dann nur noch für die Trocknung benötigt, und der Wärmebedarf für die Trocknung kann durch geeignete Wärmerückgewinnung weiter gesenkt werden. Dadurch kann der Energiebedarf für die Trocknung und Abgasreinigung drastisch reduziert werden.

Das Absorbens kann in einer Regenerationsvorrichtung regeneriert werden, so dass es in einem geschlossenen Kreislauf geführt werden kann, wobei die absorbierten flüchtigen Substanzen zurückgewonnen und wiederverwendet/-verwertet werden können. Auch das in der Regenerationsvorrichtung verwendete Gas kann in einem geschlossenen Kreislauf geführt werden, so dass statt Luft, falls gewünscht, auch ein anderes Gas verwendet werden kann, z. B. ein inertes Gas wie Stickstoff. Zur kostengünstigen Umrüstung von bestehenden Anlagen mit TNV ist es möglich, die Abgasreinigung durch die erfindungsgemäße Abgasreinigungsvorrichtung durchzuführen und die bestehende Verbrennungsanlage mit verringertem Energieeinsatz zur Beheizung der Trocknungsanlage weiterzuverwenden. Somit können die Vorteile der Erfindung bereits in bestehenden Anlagen mit geringem Investitionsaufwand erreicht werden.

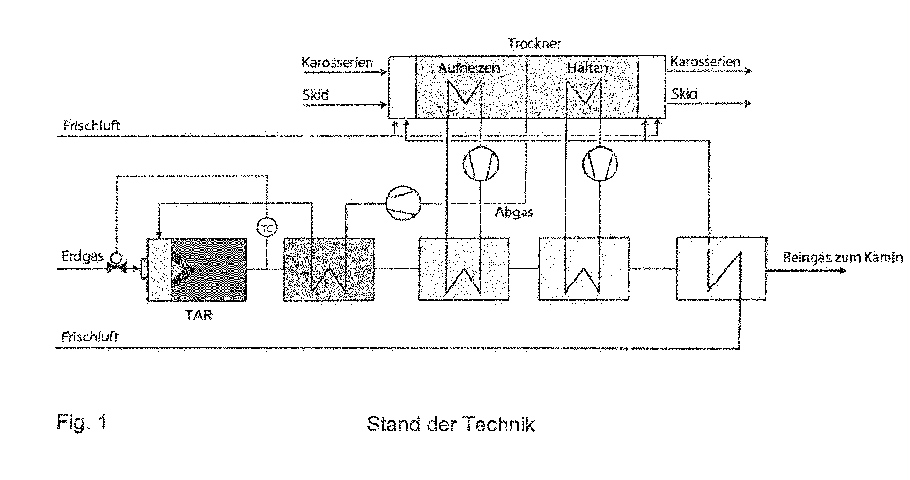

Figuren
- Fig. 1: zeigt eine herkömmliche Anlage thermischer Abluftreinigung (TAR).

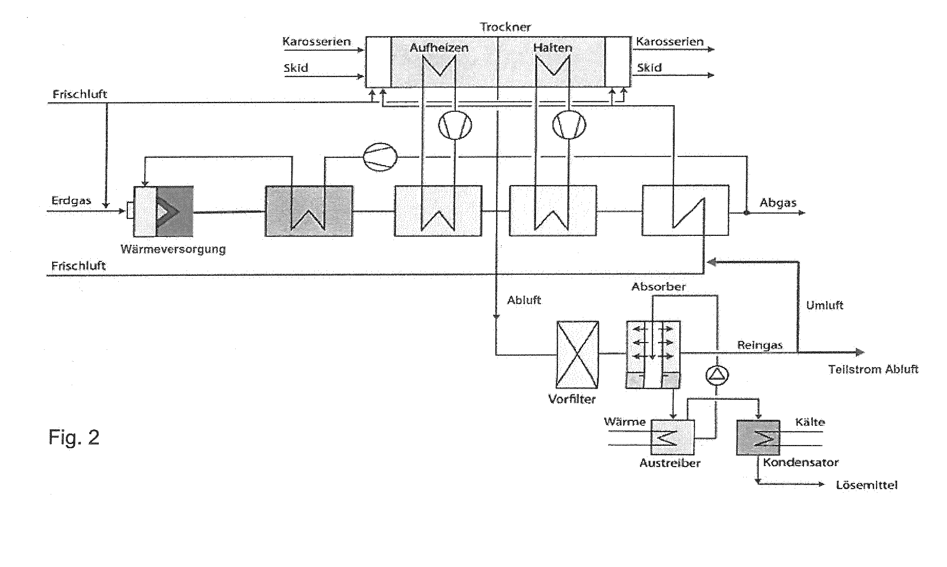

- Fig. 2: zeigt ein Beispiel einer erfindungsgemäßen Anlage mit Abgasreinigung durch Absorption.
- Fig. 3: zeigt eine beispielhafte Trägeranordnung.

Im Folgenden wird die Erfindung genauer beschrieben. Der Trocknungsbereich des Trocknungssystems kann herkömmlich aufgebaut sein und umfasst mindestens eine Aufheizzone zum Aufheizen auf eine vorgegebene Temperatur und eine Haltezone, in der die vorgegebene Temperatur zur weiteren Trocknung gehalten wird. Die lackierten Karosserien oder Bauteile, die etwa durch Tauchlackierung, Lackierung mit Füller, Decklack, Klarlack oder Unterbodenschutz behandelt wurden, werden im Trocknungsbereich unter Gasdurchströmung getrocknet, bevorzugt mit Luft, wobei das Lösemittel aus dem Lack in das Gas übergeht, das als Abgas abgesaugt wird. Die Zuluft (oder ein anderes Gas als Luft) zum Trocknungsbereich wird auf die jeweils vorgegebenen Temperaturen erwärmt, wobei die Erwärmung zumindest teilweise durch Wärmetauscher erfolgen kann, in denen z. B. Wärme aus dem Abgas auf die Zuluft übertragen wird. Das Abgas wird der Abgasreinigungsvorrichtung zugeführt.

In der Abgasreinigungsvorrichtung wird das Abgas durch eine geeignete Luftführung auf eine Trägeranordnung gerichtet, bei der ein geeignetes flüssiges Absorbens an einer Anzahl von Trägern als Flüssigkeitsfilm herabläuft. Die Trägeranordnung umfasst einen Zulauf, einen Ablauf und die eigentlichen Träger. Der Zulauf kann etwa kasten- oder wannenförmig ausgebildet sein und weist an seiner Unterseite Aufnahmeöffnungen für die Träger auf, die gleichzeitig ermöglichen, dass das Absorbens aus dem Zulauf auf die Oberflächen der Träger gelangen kann, um dort einen Flüssigkeitsfilm zu bilden. Der Ablauf kann ähnlich wie der Zulauf gestaltet sein, muss jedoch in der Lage sein neben der Halterung der Träger auch den Ablauf des beladenen Absorbens zu ermöglichen.

Als Träger können z.B. Profile, Schläuche, Platten oder Rohre verwendet werden. Bevorzugt werden gewirkte Kunststoffschläuche verwendet, die bevorzugt aus Thermoplasten, z.B. Polyester, Polyamid, Polyethylen, Polypropylen, bestehen. Besonders geeignet ist Polyester. Die gewirkten Kunststoffschläuche können aus einem oder mehreren Filamenten gebildet sein, bevorzugt aus mehreren Filamenten, Bevorzugt werden die gewirkten Kunststoffschläuche durch eine thermische Behandlung, die etwa zu einem teilweisen Zusammenschmelzen oder Zusammensintern der Filamente, gegebenenfalls unter Schrumpfung, führt, mechanisch stabiler gemacht (die Herstellung solcher Schläuche ist z. B. in der DE 42 33 827 C2 beschrieben). Dadurch werden die ursprünglich meist biegeschlaffen gewirkten Kunststoffschläuche formstabiler und zeigen eine gewisse Eigensteifigkeit und Biegeelastizität. Sie bleiben aber porös, so dass es im Betrieb der Vorrichtung zu einem vorteilhaften Flüssigkeitsaustausch zwischen der Innenseite und der Außenseite der gewirkten Kunststoffschläuche kommt, der sowohl die Fließgeschwindigkeit des Flüssigkeitsfilms verringert als auch eine gute Durchmischung der Flüssigkeit und eine Selbstreinigung des Trägers bewirkt. Statt ganzer Schläuche können auch z.B. längs halbierte Schläuche verwendet werden, die also einen halbkreisförmigen Querschnitt aufweisen. Die Träger weisen bevorzugt einen äußeren Durchmesser von höchstens 2 cm, stärker bevorzugt von höchstens 1 cm, besonders bevorzugt von höchstens 6 mm auf. Die Länge der Träger beträgt bevorzugt das mindestens 10-fache, stärker bevorzugt das mindestens 30-fache des Durchmessers. Bevorzugt wird eine Vielzahl von Trägern verwendet, die parallel zueinander mit gleichem Abstand (bevorzugt ist das Abstandsmaß das 1,5- bis 2,5-fache des äußeren Durchmessers der Träger) nebeneinander in einer geraden oder gekrümmten Reihe angeordnet sind, wobei bevorzugt mehrere, z.B. 10 bis 20, solcher Reihen hintereinander, bevorzugt jeweils um einen halben Abstand seitlich versetzt, also lückenüberdeckend, parallel zueinander angeordnet sind. Der Luftstrom wird bevorzugt senkrecht zu diesen Reihen, also im Kreuzstrom, so geführt, dass er den Flüssigkeitsfilm auf den Trägeroberflächen möglicht vollständig umstreicht, und kann durch ein Gebläse erzeugt und durch Luftleitelemente geführt und verteilt werden. Dabei sollte die Geschwindigkeit des Luftstroms nicht zu hoch gewählt werden, um eine Erzeugung und Mitnahme von Flüssigkeitströpfchen zu vermeiden. Der Flüssigkeitsfilm auf der Trägeroberfläche ist bevorzugt ein Fallfilm, d. h. die Flüssigkeit bewegt sich aufgrund der Schwerkraft von oben nach unten. Deshalb sind die Träger mit ihrer Längserstreckung gegenüber der Waagerechten geneigt, bevorzugt zumindest im Wesentlichen senkrecht angeordnet.

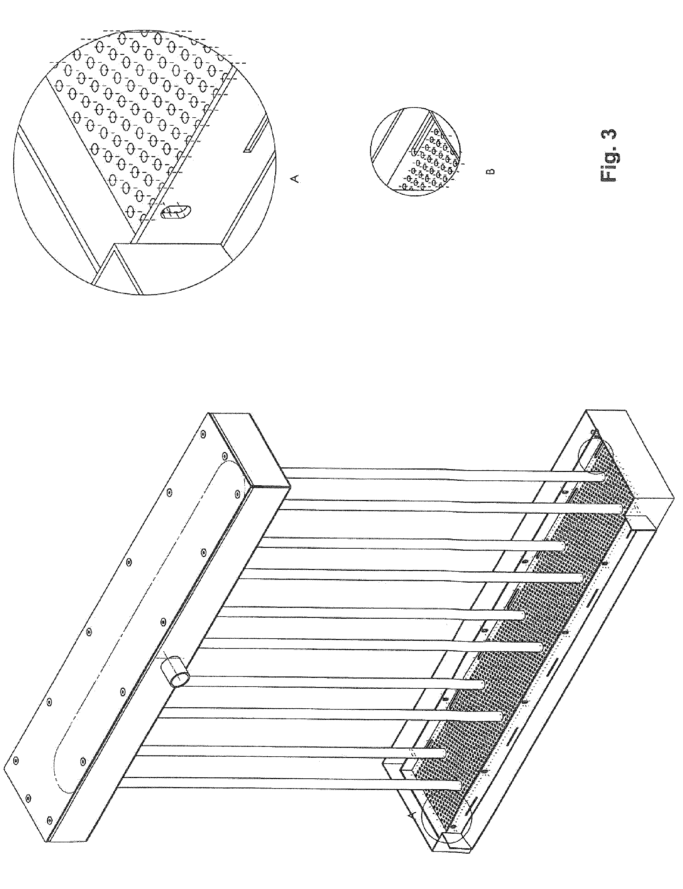

Fig. 3 zeigt beispielhaft (der Übersicht halber sind nur wenige Träger dargestellt), wie die einzelnen Träger bevorzugt durch oben und unten angeordnete Lochplatten jeweils an ihren oberen und unteren Enden gehalten, etwa durch Verklebung, Verschweißung oder Klemmung, und dadurch gespannt gehalten werden können. Die obere Lochplatte (Zulauf) dient gleichzeitig zur Flüssigkeitszufuhr und -verteilung zu den einzelnen Trägern und weist nur Löcher zur Aufnahme der Träger auf. Der Ablauf der Flüssigkeit kann durch die untere Lochplatte (Ablauf) erfolgen, die zusätzlich zu den Löchern zur Aufnahme der Träger weitere Löcher aufweisen kann, die den Ablauf der Flüssigkeit, die an der Außenseite der Träger hinabläuft, ermöglichen.

Als Absorbens kann jede Flüssigkeit dienen, die die jeweilige flüchtige organische(n) Substanz(en) absorbieren und wieder abgeben (desorbieren) kann. Meist ist es vorteilhaft, wenn diese Flüssigkeit keinen zu hohen Dampfdruck aufweist, vor allem sollte der Dampfdruck im Allgemeinen deutlich unter dem Dampfdruck der flüchtigen Substanz liegen. Bevorzugt liegt deshalb der Siedepunkt des Absorbens bei mindestens 99 °C, stärker bevorzugt bei mindestens 150 °C, besonders bevorzugt bei mindestens 200 °C. Geeignete Absorbentien sind z.B. Wasser; Lösungen, bevorzugt wässrige Lösungen von Cyclodextrinen (z. B. α-, β-oder γ- Cyclodextrine) oder Cylodextrinderivaten (z. B. CAVASOL ® W6 HP der Firma Wacker Chemie AG); flüssige Paraffine; Mineralöle, z. B. Spindelöl (z. b. ISO-VG 8, 10 oder 46 der Firma LINOCEM GmbH & Co. KG); Ethylenglykol; Glycerin; Polyethylenglykole; Ethoxilate von Alkoholen, Aminen oder Amiden und Säuren (z. B. Lutensol ® der Firma BASF SE); und Polyethylenglykoldialkylether (z. B. Genosorb ® der Firma Clariant GmbH, insbesondere Genosorb ® 300, 1753 oder 1843).

Flüchtige organische Substanzen im Sinne der Erfindung umfassen alle organischen Substanzen, die einen solchen Dampfdruck bei Raumtemperatur aufweisen, dass nachweisbare Mengen in die Luft übergehen können, insbesondere organische Lösemittel wie aliphatische und aromatische Kohlenwasserstoffe, Alkohole, Aldehyde, Ketone, Ether und Ester. Abhängig von der jeweiligen flüchtigen Substanz kann ein geeignetes Absorbens ausgewählt werden, wobei besonders geeignete Absorbentien durch Vorauswahl nach herkömmlichen Kriterien (ähnliche chemische Substanzen, Dipolmomente, Polarisierbarkeiten) unter Berücksichtigung eines ausreichenden Unterschieds der Dampfdrücke und durch experimentelle Bestätigung der Eignung leicht gefunden werden können.

Das in der Abgasreinigungsvorrichtung gereinigte Abgas kann vollständig oder teilweise in den Trocknerbereich zurückgeführt werden. Dadurch ist ein Umluftbetrieb möglich. Die restliche Abwärme kann nahezu vollständig zur Vorwärmung des Frischluftanteils durch Wärmetauscher verwendet werden (oder für anderen Wärmebedarf). Zur Reinigung können mehrere Reinigungsstufen hintereinander geschaltet werden.

Das mit den flüchtigen organischen Substanzen beladene Absorbens aus der Abgasreinigungsvorrichtung kann ebenfalls zurückgeführt werden, wobei bevorzugt zumindest ein Teilstrom oder der Gesamtstrom des beladenen Absorbens durch eine Regenerationsvorrichtung geleitet wird, in der die flüchtigen organischen Substanzen wieder, zumindest teilweise, aus dem Absorbens entfernt werden. Bei der Verwendung mehrerer Reinigungsstufen kann dabei für die erste Reinigungsstufe bereits teilweise beladenes Absorbens verwendet werden und für darauffolgende Reinigungsstufen entsprechend weniger beladenes Absorbens.

Als Regenerationsvorrichtung wird bevorzugt eine ähnliche Vorrichtung wie die Abgasreinigungsvorrichtung verwendet, die sich jedoch dadurch unterscheidet, das das beladene Absorbens als Flüssigkeit zugeführt wird und als Gas ein von flüchtigen organischen Substanzen weitgehend freies Gas, bevorzugt Luft, zugeführt wird, so dass die flüchtigen organischen Substanzen aus dem beladenen Absorbens in das Gas übertreten und als Folge das Absorbens durch Desorption entladen wird. Um diesen Vorgang zu begünstigen, wird das beladene Absorbens bevorzugt erwärmt zugeführt, etwa mit mindestens 50, bevorzugt mindestens 60, stärker bevorzugt mindestens 70, besonders bevorzugt mindestens 80 °C. Das beladene Gas weist typischerweise eine wesentlich höhere Konzentration an flüchtigen organischen Substanzen auf als das Abgas aus dem Trocknerbereich. Dieses beladene Gas wird bevorzugt in einer Kondensationseinheit von den enthaltenen flüchtigen Substanzen zumindest teilweise befreit, so dass es anschließend bevorzugt in die Regenerationsvorrichtung zurückgeführt werden kann. Die Kondensation der flüchtigen Substanz in der Kondensationsvorrichtung kann bevorzugt durch Kühlung etwa mittels Kühlwasser oder einer Kältemaschine erfolgen, so dass sich die flüchtige Substanz an einer Wärmetauscheroberfläche niederschlägt, von dieser abläuft und so entfernt werden kann. Alternativ oder auch zusätzlich zur Kühlung kann die Kondensation durch Druckerhöhung ausgeführt werden. Die flüchtigen organischen Substanzen werden in verflüssigter Form zurückgewonnen und können wiederverwendet werden.

Mit dem erfindungsgemäßen Trocknungssystem läßt sich das erfindungsgemäße Verfahren ausführen, das die folgenden Schritte umfasst:
Trocknung von Lack unter Verdampfung von Lösungsmittel, das eine oder mehrere flüchtige organische Substanzen enthält,
Absaugen von Abgas aus dem Trocknungsschritt, das die flüchtigen organischen Substanzen enthält,
Reinigung des Abgases, das die flüchtigen organischen Substanzen enthält, durch Absorption der flüchtigen organischen Substanzen durch ein flüssiges Absorbens, dadurch gekennzeichnet, dass die Absorption durchgeführt wird, indem das Absorbens über eine Anzahl von Trägern geleitet wird, so dass es auf der Oberfläche der Träger einen fließenden Flüssigkeitsfilm bildet, und das Abgas im Kreuzstrom an dem Flüssigkeitsfilm vorbei geführt wird.

Das durch Absorption der flüchtigen organischen Substanzen beladene Absorbens kann durch Entfernen der flüchtigen organischen Substanzen regeneriert und wiederverwendet werden,

Das mit der Regenerationsvorrichtung ausführbare Regenerationsverfahren umfasst folgende Schritte:
a) Vorbeiführen von Gas an mit der Flüssigkeitsmischung benetzten Trägern, so dass mindestens ein Teil der mindestens einen flüchtigen Substanz aus der Flüssigkeitsmischung in das Gas übergeht,
b) Kondensation der mindestens einen flüssigen Substanz aus dem aus dem Schritt a) erhaltenen Gas durch Veränderung von Druck oder Temperatur des erhaltenen Gases, so dass mindestens ein Teil der mindestens einen flüchtigen Substanz aus dem Gas abgeschieden wird und die Konzentration der mindestens einen flüchtigen Substanz in dem Gas verringert wird und
c) Rückführen des aus dem Schritt b) erhaltenen Gases in den Schritt a).

## Patentansprüche

1. Trocknungssystem zur Lacktrocknung mit
mindestens einem Trocknungsbereich, in dem Lack unter Verdampfung von Lösungsmittel, das eine oder mehrere flüchtige organische Substanzen enthält, getrocknet wird,
einer Abgasabsaugungsvorrichtung, die Abgas, das eine oder mehrere flüchtige organische Substanzen enthält, aus dem Trocknungsbereich absaugt,
einer Abgasreinigungsvorrichtung, der das abgesaugte Abgas zugeführt wird,
**dadurch gekennzeichnet, dass** die Abgasreinigungsvorrichtung folgendes umfasst:
eine Trägeranordnung mit einem Zulauf und einem Ablauf für ein flüssiges Absorbens, wobei die Trägeranordnung so gestaltet ist, dass das Absorbens zwischen Zulauf und Ablauf über eine Anzahl von Trägern geleitet werden und auf der Oberfläche der Träger einen fließenden Flüssigkeitsfilm bilden kann,
einer Gasführung mit einem Gaseinlass und einem Gasauslass, zwischen denen das zugeführte Abgas an dem Flüssigkeitsfilm vorüberstreichen kann, so dass die flüchtigen organischen Substanzen aus dem Abgas durch das Absorbens absorbiert werden können,

2. Trocknungssystem nach Anspruch 1, das weiter eine Regenerationsvorrichtung aufweist, die das aus der Abgasreinigungsvorrichtung kommende Absorbens, das mit den flüchtigen organischen Substanzen beladen ist, durch Entfernen der flüchtigen organischen Substanzen regeneriert.

3. Trocknungssystem nach Anspruch 2, bei dem die Regenerationsvorrichtung umfasst:
eine Desorbereinheit mit
einer Trägeranordnung mit einer Zulauf und einem Ablauf für das beladene Absorbens, wobei die Trägeranordnung so gestaltet ist, dass das beladene Absorbens zwischen Zulauf und Ablauf über eine Anzahl von Trägern geleitet werden und auf der Oberfläche der Träger einen fließenden Flüssigkeitsfilm bilden kann, und
einer Gasführung mit einem Gaseinlass und einem Gasauslass, zwischen denen das Gas an dem Flüssigkeitsfilm vorüberstreichen kann, so dass die flüchtigen organischen Substanzen aus dem beladenen Absorbens in das Gas übertreten können;
eine Kondensationseinheit mit einem Gaseingang, der mit dem Gasauslass der Desorbereinheit verbunden ist, einem Gasausgang, der mit dem Gaseinlass der Desorbereinheit verbunden ist, einem Wärmetauscher zum Kühlen hindurchgeleiteten Gases, das aus der Desorbereinheit kommt, mittels eines durchleitbaren Kühlmediums, so dass die flüchtigen organischen Substanzen aus dem Gas kondensiert werden können, und einem Ablauf, durch den die kondensierten flüchtigen organischen Substanzen ablaufen können; und
ein Gebläse, das in eine Gasverbindung zwischen der Desorbereinheit und der Kondensationseinheit eingebaut ist, so dass ein Gasstrom durch die Vorrichtung erzeugt werden kann.

4. Trocknungssystem nach einem der Ansprüche 1 bis 3, bei dem die Träger der Abgasreinigungsvorrichtung und/oder der Desorbereinheit poröse, gewirkte Kunststoffschläuche sind.

5. Trocknungssystem nach einem der Ansprüche 1 bis 4, bei dem in der Abgasreinigungsvorrichtung und/oder der Desorbereinheit das Absorbens, das über die Anzahl von Trägern geleitet wird, und das Gas im Kreuzstrom geführt werden.

6. Verfahren zur Lacktrocknung mit folgenden Schritten:
Trocknung von Lack unter Verdampfung von Lösungsmittel, das eine oder mehrere flüchtige organische Substanzen enthält,
Absaugen von Abgas aus dem Trocknungsschritt, das die flüchtigen organischen Substanzen enthält,
Reinigung des Abgases, das die flüchtigen organischen Substanzen enthält, durch Absorption der flüchtigen organischen Substanzen durch ein flüssiges Absorbens, **dadurch gekennzeichnet, dass** die Absorption durchgeführt wird, indem das Absorbens über eine Anzahl von Trägern geleitet wird, so dass es auf der Oberfläche der Träger einen fließenden Flüssigkeitsfilm bildet, und das Abgas im Kreuzstrom an dem Flüssigkeitsfilm vorbei geführt wird.

7. Verfahren zur Lacktrocknung gemäß Anspruch 6, das weiter einen Regenerationsschritt umfasst, in dem das Absorbens, das aus dem Schritt der Reinigung des Abgases kommt und mit den flüchtigen organischen Substanzen beladen ist, durch Entfernen der flüchtigen organischen Substanzen regeneriert wird.

8. Verfahren zur Lacktrocknung gemäß Anspruch 7, bei dem der Regenerationsschritt umfasst, dass das Absorbens über eine Anzahl von Trägern geleitet wird, so dass es auf der Oberfläche der Träger einen fließenden Flüssigkeitsfilm bildet, und ein Gas im Kreuzstrom an dem Flüssigkeitsfilm vorbeigeführt wird, so dass die flüchtigen organischen Substanzen aus dem beladenen Absorbens in das Gas übertreten;
Kondensation der flüchtigen organischen Substanzen aus dem Gas, das aus dem Regenerationsschritt kommt, durch Kühlen des Gases, das aus dem Reinigungsschritt kommt.

9. Verfahren zur Lacktrocknung nach einem der Ansprüche 6 bis 8, wobei die Träger im Reinigungsschritt und/oder Desorptionsschritt poröse, gewirkte Kunststoffschläuche sind.
